# EUROPEAN PATENT SPECIFICATION

(11) **EP 0 455 499 B1**
(45) Date of publication and mention of the grant of the patent: **16.10.1996**
(21) Application number: 91304009.3
(22) Date of filing: 03.05.1991
(51) Int. Cl.: A01D 45/00

(54) **Mushroom harvesting**
Verfahren und Vorrichtung zum Ernten von Pilzen
Procédé et appareil pour la récolte des champignons

(30) Priority: 04.05.1990 GB 9010128
(43) Date of publication of application: 06.11.1991
(73) Proprietor: PRIORLUCKY LIMITED, Great Yarmouth Norfolk NR27 5BQ (GB)
(72) Inventor: Russell, Tony Albert, Frettenham, Norwich (GB); Wheeler, Geoffrey Charles, Truro, Cornwall (GB)
(74) Representative: Gillam, Francis Cyril

(56) References cited:
- EP-A- 0 270 469
- EP-A- 0 428 284
- FR-A- 2 588 719
- NL-A- 6 814 542
- NL-A- 8 600 887
- US-A- 3 460 330
- US-A- 4 043 105

## Description

This invention relates to a picking head assembly suitable for incorporation in an automated mushroom harvesting apparatus, as well as to methods of operating such a picking head assembly. The invention further relates to an automated mushroom harvesting apparatus whenever incorporating a picking head assembly of this invention, and to methods of operating such automated mushroom harvesting apparatus.

The growing and harvesting of mushrooms - and particularly of the species Agaricus - on a commercial scale is a most labour-intensive industry, in which approximately 75% of the work-force is engaged in the process of harvesting (picking) the growing maturing fruit bodies (mushrooms). In many countries, there is an increasing demand for commercially-produced mushrooms but, on account of the labour-intensive nature of the business, it is difficult for producers to keep pace with the demand. Mushroom picking is generally low-level poorly-paid work and the labour turnover rates tend to be high. If therefore the picking process could be automated, the industry would obviously benefit.

The automated picking of mushrooms is hampered by the difficulty that mushrooms bruise easily and then discolour, or - if the mushrooms are subjected to slightly greater forces - the mushrooms tend to break apart or separate from their stalks. Preliminary trials with devices intended to assist the automated picking of mushrooms have shown a marked tendency to bruise or otherwise damage large numbers of the mushrooms and it has therefore become apparent that an economically-viable design of automatic mushroom harvester requires the provision of a picking head assembly able to operate at a high speed but which will damage only relatively few mushrooms.

Research work directed at minimising the damage when picking mushrooms automatically has shown that relatively low energy levels must be used at the moment when contact is established between a picking head and a selected mushroom. However, if the picking head is arranged to approach and contact a selected mushroom at a very low speed, to minimise the impact energy, the overall speed of the operation of the automated harvester will be very low and so only relatively few mushrooms will be picked within a given time, as compared to a manual picker. Moreover, complex control mechanisms must be provided to determine the precise position, relative to some datum, of the surface of the mushroom to be contacted by the picking head, because the height of growing mushrooms is so variable, in order that the approach speed of the picking head may suitably be reduced to a sufficiently low value just before contact takes place. This further complication reduces the reliability and increases the likelihood of damage to mushrooms, as well as further reducing the operating speed of the harvester.

The present invention stems from research into the automated picking of mushrooms using a harvester such as is described in EP-A-0 428 284 (which falls within the terms of Article 54(3) EPC), with a view to minimising damage to the mushrooms to be harvested, and yet maintaining high picking rates. As a consequence of that research, it has been established that provided the overall energy levels of the moving components of a picking head assembly can be maintained at sufficiently low levels, there is no need for the speed of approach of the picking head to be reduced as the head approaches and contacts a mushroom, so obviating the requirement for accurately knowing the position of the surface of the mushroom to be contacted by the picking head, prior to the picking head approaching that mushroom.

Accordingly, one aspect of this invention provides a method of operating a picking head assembly of an automated mushroom harvesting apparatus including a carriage arranged for movement over a mushroom growing area, the picking head assembly being arranged for mounting on the carriage and having a pneumatic ram with a piston rod supporting at its free end a suction head, in which method the line of action of the ram is aligned with a mushroom to be harvested, and the ram is then operated to drive the suction head towards said mushroom, the rate of movement of the head being substantially constant as the suction head approaches said mushroom and the total kinetic energy of the moving components of the picking head assembly approaching said mushroom during that movement being maintained at not more than 0.25J.

It will be appreciated that in the operating method of this invention, the suction head of the picking head is moved towards a selected mushroom at a substantially constant rate at least during the final approach to a mushroom, until contact takes place. Thus, there is no need for the vertical position of the surface of the mushroom to be known in advance of the approach of the head to that mushroom, for the speed of approach of the head does not have to be deliberately reduced immediately prior to contact taking place. Then, to ensure the likelihood of damage to the mushroom is maintained at an acceptably low level, the kinetic energy of the moving components should be no greater than 0.25 Joules (J), during that final approach.

In order to maintain picking rates at acceptably high levels, it is important that the picking head assembly is operated as quickly as possible; thus the carriage should be positioned over a mushroom to be harvested by rapid movement of that carriage, followed by operation of the ram at as high a rate as possible consistent with the kinetic energy level defined hereinbefore. In turn, the mass of the moving components of the picking head must also be kept as low as possible, consistent with strength requirements, to allow for rapid operating speeds for the ram. In view of this, the mass of the moving components should be less than 0.25kg, and the approach speed of the suction head should be maintained at not more than 2m/s. Typically, the approach speed may be in the range of from 1.5m/s to 2m/s, with the mass of the moving components being from 0.14kg to 0.085kg.

A particularly advantageous operating method for the picking head assembly is to supply compressed air to the pneumatic ram at the commencement of the operation of the ram, so as to accelerate the suction head towards a mushroom to be picked; shortly thereafter, a restriction is placed on the exhaust from the ram to limit the speed of movement whilst allowing the suction head to continue movement towards a mushroom until contact therewith is established. Then, and following the attachment of the suction head to the mushroom by a suction technique, the direction of movement of the ram should be reversed, so as to draw the mushroom away from the growing area.

It is greatly preferred for the suction head to be connected to a sub-atmospheric pressure source throughout the movement of the suction head towards a mushroom to be harvested and subsequently during the movement of the head away from the contact position. In this way, air will be drawn through the suction head until the head contacts a mushroom; thereupon, the pressure within the suction head will fall and the suction head will attach itself to the contacted mushroom. Moreover, this drop in pressure within the suction head, and so also in the associated pipes connecting the suction head to the sub-atmospheric pressure source, may be used to detect that contact with a mushroom has occurred, and so to control the reversal of the ram movement.

Most preferably, the suction head is twisted about the axis of the head immediately after contact has been established between the suction head and a mushroom, whereby such twisting action takes place either before or during the commencement of the reverse movement of the ram. Such a twisting action may serve to break the stalk of a mushroom away from the mycelium within the growing medium, whereby the mushroom may easily be picked from the growing area without breaking the stalk and without significantly disturbing the mycelium. Tests have shown that such twisting movement of the suction head preferably is effected through an angle of from 30°-90°, in order effectively to assist severance of the stalk from the mycelium.

According to a second aspect of this invention, there is provided a picking head assembly for incorporation in an automated mushroom harvesting apparatus including a carriage arranged for movement over a growing area, which picking head assembly has a pneumatic ram arranged for mounting on the carriage so that the line of action of the piston rod of the ram is generally towards and away from a selected mushroom in the growing area, a resiliently deformably suction head mounted on the free end of the piston rod for contacting and then holding by suction a selected mushroom, and pneumatic control means is suitably adapted for operating the ram which said means initially supplies air under pressure to the ram to drive the piston rod and so move the suction head towards a selected mushroom, and also restricts the venting of exhaust air from the ram to limit the speed of movement of the head thereby to maintain the kinetic energy of the moving components of the picking head at less than 0.25J at the time of contact between the suction head and a selected mushroom.

So that the kinetic energy of the moving components of the picking head may be maintained at less than 0.25J, the mass of those moving components must be as low as possible, and preferably less than 0.25kg, but more preferably within the rate of 0.085kg to 0.15kg. The components of the ram should therefore be manufactured from low-density materials consistent with the strength requirements for the ram - and so for example from aluminium or aluminium alloys, or plastics materials. Moreover, in order to minimise the air pressure required to expand the ram at an acceptable rate, it is preferred for the pneumatic ram to have the piston and rod thereof freely slidable within the ram cylinder with a minimum of friction therebetween. Advantageously, no seals are employed between the piston and ram cylinder, the piston being a loose fit within the cylinder so as thereby to minimise friction within the ram.

In a case where the suction head is to be twisted about the axis of the ram in order to assist severance of a mushroom from the mycelium before or during commencement of a contraction stroke of the ram, it is preferred for the ram to be adapted for rotatable mounting on the carriage, the piston rod being non-rotatably disposed within the ram cylinder, and means being provided to effect rotation of the ram about its own axis. Conveniently, this may be achieved by providing the ram cylinder with a polygonal, and preferably square, bore, the piston rod having a correspondingly-shaped piston mounted within the bore whereby rotation of the cylinder will effect corresponding rotation of the piston rod.

In order that the invention may better be understood, it will now be described in greater detail, though only by way of example, and one specific embodiment of picking head of this invention will also be described, reference being made as necessary to the accompanying drawings, in which:-
Figure 1 is a graph plotting critical impact energy levels against the mass of a picker head;
Figure 2 is a graph plotting the mass of the picker head against velocity;
Figure 3 is a graph plotting the mass of a picker head against velocity, corrected for the weight effect of the picker head;
Figure 4 is a diagrammatic sectional view through a picker head assembly constructed and arranged in accordance with this invention; and
Figure 5 is a section through the head of Figure 4, taken on line V-V marked on that Figure.

Presuming that a picker head assembly for harvesting mushrooms includes a support member carrying a suction head which is moved towards a selected mushroom for harvesting, a series of tests were conducted in an attempt to determine the maximum kinetic energy level for those components which are moved towards the selected mushroom and which are stopped by the impact between the suction head and the selected mushroom, consistent with minimal damage occurring to the selected mushroom. A typical acceptable damage rate for commercially-grown and harvested mushrooms is 10%, and so the critical impact energy level was deemed to be that energy level at which 90% of typical commercially-grown mushrooms of the species Agaricus remained undamaged. For the purpose of these tests, damage included the stalk being driven into the growing medium, as well as more apparent damage such as the cap of the mushroom breaking or separating from its stalk.

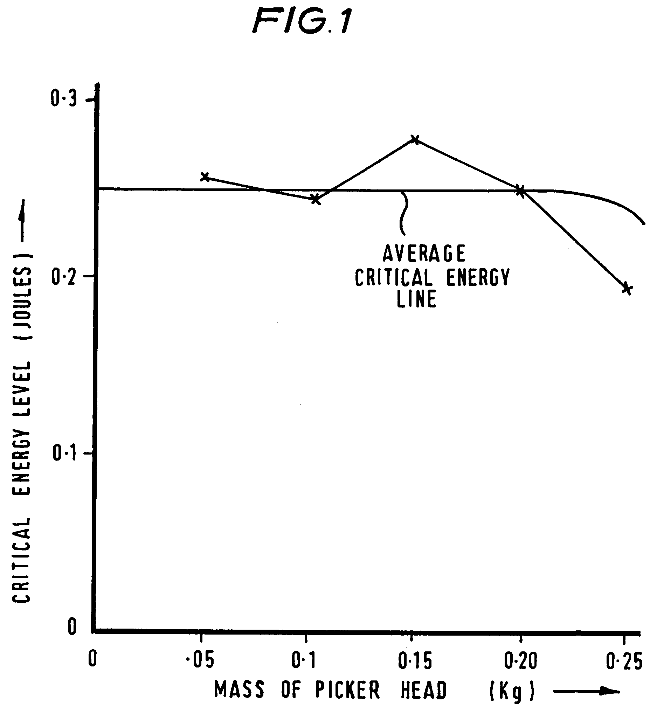

Figure 1 is a plot of the critical kinetic values as determined from a series of tests on commercially-grown mushrooms, plotted against the mass of the picker head with which the impact with the mushrooms was established. For this test, mushrooms of sizes within the range of 35mm to 45mm cap diameter were chosen. From that graph, it can be deduced that the average critical impact energy level was substantially constant for picker head masses below 0.25kg, the corresponding energy value being 0.25J. When the picker mass exceeded 0.25kg, it was found to be sufficiently high to cause some damage to a significant number of mushrooms, even with velocity at impact being reduced to zero.

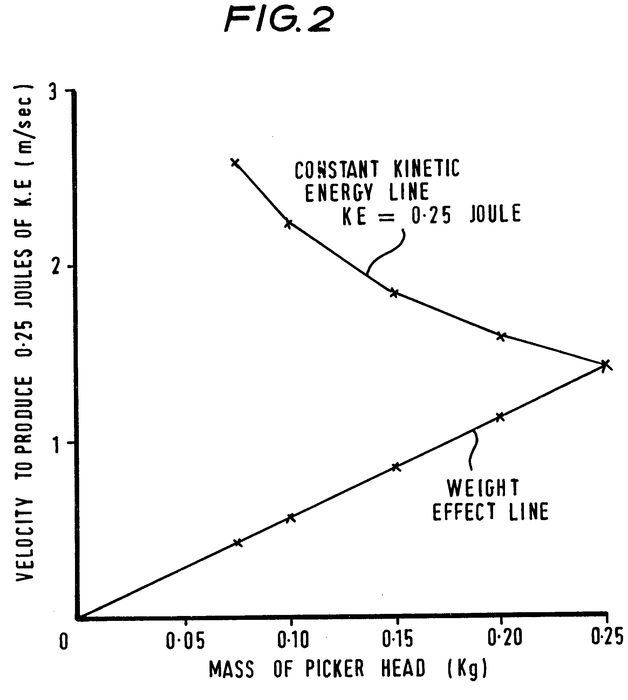

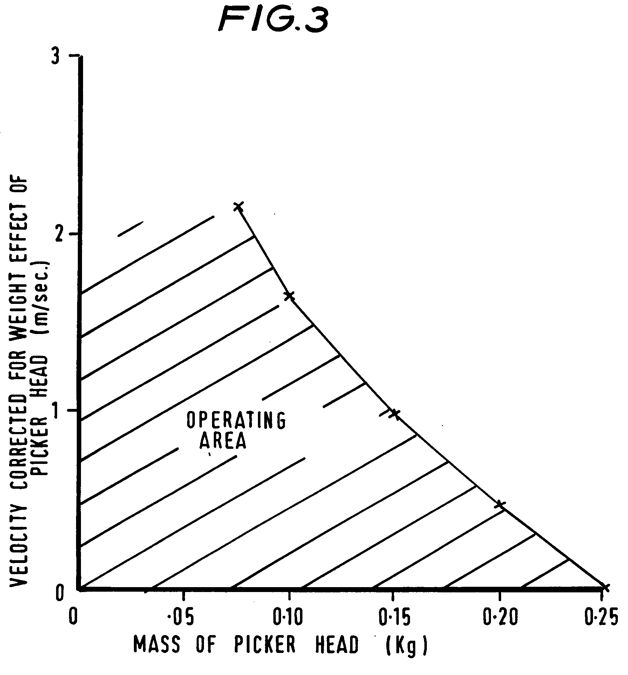

Calculations were then performed to determine the maximum velocity for picker heads of various masses, to give rise to the critical kinetic energy value of 0.25J, at impact. The results are shown in Figure 2, where velocity is plotted against the picker head mass. Also shown on this Figure is a weight-effect line, based on the presumption that the damaging effect of pure weight (which it has been found is sufficient to cause damage to mushrooms with zero impact velocity when the picker head mass reaches 0.25kg) reduces linearly to zero with reducing weight. The vertical distance between the weight-effect line and the critical constant kinetic energy line represents the maximum velocity at impact for a given picker head mass to give rise to the critical energy value corrected for the weight-effect, and this corrected velocity is plotted in Figure 3 against the mass of the picker head. From this, it can be seen that in order to ensure not more than 10% of typical commercially-grown mushrooms are damaged to any significant extent, the picker head mass and the impact velocity must together fall below the critical line shown in Figure 3.

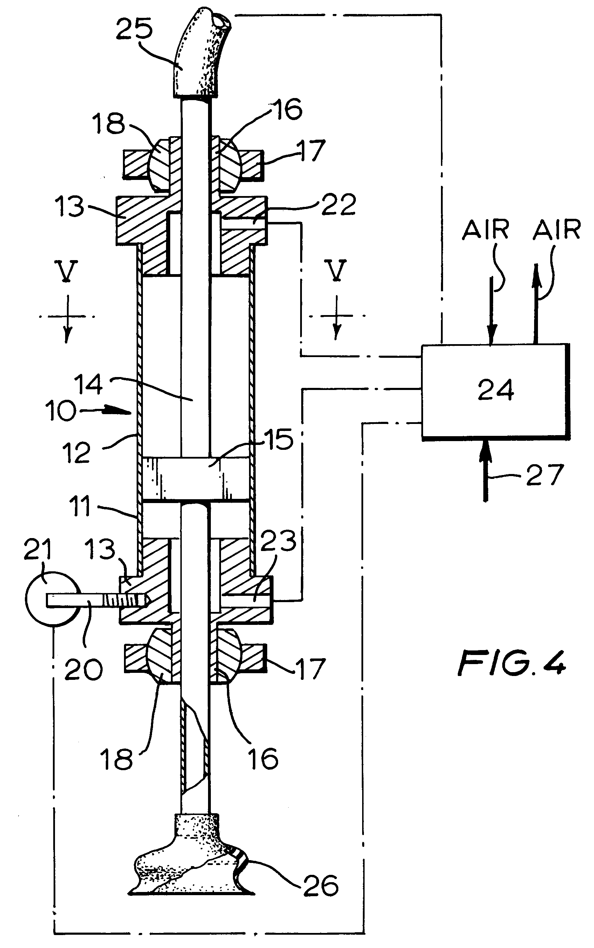

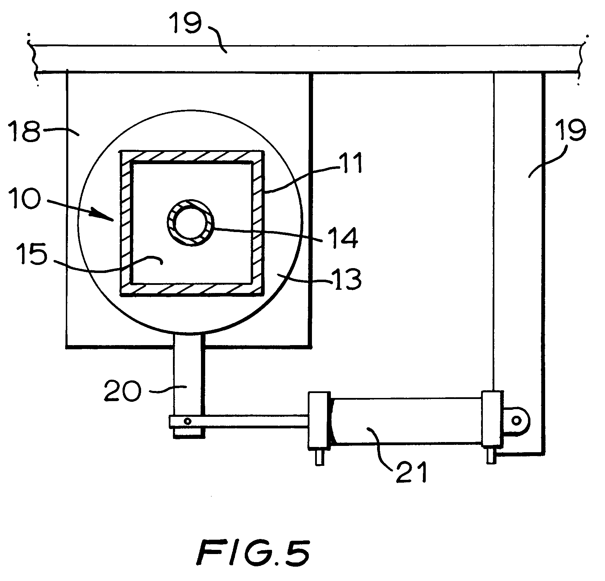

Figures 4 and 5 show a typical picker head assembly arranged and constructed in accordance with this invention. This picker head assembly comprises a pneumatic ram 10 having a cylinder 11 fabricated from a length of thin-wall square section tube 12, and a pair of end caps 13 having coaxial circular bores in which is slidably located a piston rod 14 carrying a piston 15 disposed within the tube 12. The piston 15 is of a shape corresponding closely to that of the internal shape of the tube 12, but is a clearance running fit within that tube 12 so as to minimise friction therewith, there being no gas seals employed between the piston and the tube.

Each end cap 13 has a circular boss 16 which is journalled on an associated mounting bracket 17 by means of a bush 18, whereby the cylinder is held in a fixed axial position between the two brackets 17. The brackets 17 form part of a carriage of a mushroom harvester, which carriage is shown in part at 19 and which is movable over a mushroom growing area under the control of a suitable two-axis drive mechanism.

The lower end cap 13 has a crank arm 20 projecting radially therefrom, a further pneumatic ram 21 linking that crank arm to the carriage 19, whereby expansion and contraction of the ram 21 causes the cylinder 11 to rotate about its own axis. The ram 21 may be spring-urged to one limiting position whereby air under pressure may drive the ram to its other limiting position against the spring bias.

Ports 22 and 23 are provided at the two ends respectively of the cylinder 11, which ports are connected to a pneumatic controller 24. The piston rod 14 is hollow, and a flexible pipe 25 connects the upper end of that piston rod to the controller 24. At the lower end of the piston rod 14, there is provided a soft resilient suction head 26, which suction head is appropriately configured for contacting the upper surface of a growing mushroom and then effecting a seal thereagainst, whereby the connection of the pipe 25 to a low pressure source will cause the mushroom to be securely held by the suction head 26.

The controller 24 is connected both to a sub-atmospheric pressure source and to a super-atmospheric pressure source, and is arranged to perform a preset operation cycle on receiving an electrical trigger signal 27. This causes the picker head assembly to operate through one complete cycle, picking a selected mushroom.

The mass of the moving components comprising the piston 15, the piston rod 14 and the suction head 26, as well as part of the pipe 25, are maintained as low as possible, consistent with the strength requirements for those components. Typically, the piston rod 14 and piston 15 are made from an aluminium alloy material, with the suction head 26 being made from a soft resilient synthetic plastics material. The piston rod 14 and piston 15 may instead be made of a plastics material. Moreover, a relatively flexible pipe 25 is employed, in order that the pipe may have minimal influence on the movement of the piston rod 14. A typical mass for the moving parts including the piston rod 14, piston 15 and suction head 26 should be in the range of from 0.14kg down to 0.085kg.

In use, the carriage 19 is moved so that the line of action of the piston rod 14 will intersect the approximate centre of a mushroom to be harvested. A trigger signal 27 is then applied to the controller 24, which causes the sub-atmospheric pressure source to be connected to the pipe 25, and also causes compressed air to be supplied to port 22, so driving the piston 15 downwardly. Shortly afterwards, the venting of port 23 is restricted, so limiting the speed of movement of the ram 10. The piston rod 14, and so also the suction head 26, move downwardly until the suction head 26 contacts the mushroom; the downward movement of the head 26, piston rod 14 and piston 15 is thereby arrested by the impact with the mushroom. Simultaneously, the pressure in pipe 25 drops, as the suction head seals against the mushroom, and this drop in pressure is detected by the controller 24. On detection of the pressure drop, air under pressure is applied to port 23, whilst port 22 is vented, so as to drive the piston 15 upwardly. Simultaneously, the controller 24 operates ram 21, so causing the cylinder 11 to be turned about it own axis and, in view of the corresponding shapes of the tube 12 and piston 15, the suction head 26 also is turned. This breaks the stalk of the mushroom away from the mycelium in the growing medium, so that the mushroom complete with its stalk may be lifted from the growing medium on upward movement of the piston rod 14.

The pressure of the air supplied to port 22, as well as the restriction placed on port 23, are selected so that the impact energy of the suction head 26 with a mushroom is less than 0.25J. Typically, therefore, the approach speed of the suction head 26 will be in the range of 1.5m/s to 2m/s, with the mass of the moving components being as described hereinbefore.

## Claims

1. A method of operating a picking head assembly (Figure 4) of an automated mushroom harvesting apparatus including a carriage (19) arranged for movement over a mushroom growing area, which picking head assembly is mounted on the carriage and has a pneumatic ram (10) with a piston rod (14) supporting at its free end a suction head (26), in which method the carriage is moved to bring the line of action of the ram (10) into alignment with a mushroom to be harvested, and the ram (10) is then operated to drive the suction head towards said mushroom, the ram (10) is operated in such a way that the rate of movement of the suction head (26) is substantially constant as the suction head (26) approaches said mushroom, and in that the total kinetic energy of the moving components of the picking head assembly approaching said mushroom during that movement is maintained at not more than 0.25J.

2. A method according to claim 1, characterised in that the mass of the moving components is maintained at less than 0.25kg.

3. A method according to claim 1 or claim 2, characterised in that the approach speed of the suction head (26) towards a mushroom to be harvested is maintained at not more than 2m/s.

4. A method according to claim 3, characterised in that the approach speed of the suction head (26) towards a mushroom to be harvested is maintained in the range of from 1.5m/s to 2m/s, and the mass of the moving components is in the range of from 0.14kg to 0.085kg.

5. A method according to any of the preceding claims, characterised in that air under pressure is supplied to the pneumatic ram (10) at the commencement of the operation of the ram, whereby the suction head is accelerated towards a mushroom to be picked; and shortly thereafter the venting of the exhaust air from the ram is restricted to limit the speed of movement of the suction head (26) whilst allowing the head to continue movement towards a mushroom until contact therewith is established.

6. A method according to any of the preceding claims, characterised in that the suction head (26) is connected to a sub-atmospheric pressure source throughout the movement of the suction head towards a mushroom to be harvested and subsequently during the movement of the head away from the contact position.

7. A method according to claim 6, characterised in that reversal of the movement of the piston rod (14) of the ram (10) is initiated on detection of a drop in pressure within the suction head (26) caused by contact of the head with a mushroom.

8. A method according to any of the preceding claims, wherein the suction head (26) is twisted about the axis of the head immediately after contact has been established between the suction head and a mushroom, which twisting action takes place either before or during the commencement of the reverse movement of the piston rod (14) of the ram (10).

9. A picking head assembly for incorporation in an automated mushroom harvesting apparatus including a carriage (19) arranged for movement over a growing area, which picking head assembly has a pneumatic ram (10) arranged for mounting on the carriage so that the line of action of the piston rod (14) of the ram (10) is generally towards and away from a selected mushroom in the growing area, a resiliently deformable suction head (26) mounted on the free end of the piston rod (14) for contacting and then holding by suction a selected mushroom, and pneumatic control means (24) for operating the ram (10), the pneumatic control means (24) is suitably adapted so that it initially supplies air under pressure to the ram (10) to drive the piston rod (14) and so move the suction head (26) towards a selected mushroom, and also restricts the venting of exhaust air from the ram (10) to limit the speed of movement of the head (26) thereby to maintain the kinetic energy of the moving components of the picking head at less than 0.25J at the time of contact between the suction head (26) and a selected mushroom.

10. A picking head assembly according to claim 9,characterised in that the mass of the moving components of the ram (10) is less than 0.25kg.

11. A picking head assembly according to claim 10, characterised in that the mass of the moving components of the ram (10) is in the range of 0.085kg to 0.15kg.

12. A picking head assembly according to any of claims 9 to 11, characterised in that the ram (10) includes a piston (15) and a piston rod (14), the piston and rod being freely slidable in the ram cylinder (12), without the provision of seals between the piston and ram cylinder.

13. A picking head assembly according to any of claims 9 to 12, in combination with a carriage (17) arranged for movement over a mushroom growing area, the pneumatic ram (10) of the picking head assembly being mounted on the carriage and there being means to move the carriage so that the line of movement of the piston rod (14) of the ram (10) may be aligned with a mushroom to be harvested.

14. A picking head assembly according to claim 13, characterised in that the piston rod (14) is non-rotatably mounted within the ram cylinder (12), in that the ram cylinder (12) is rotatably mounted on the carriage (17), and in that the means (20,21) are provided to effect twisting movement of the ram (10) with respect to the carriage.

## Patentansprüche

1. Verfahren zum Betreiben einer Abpflückkopf-Einrichtung (Figur 4) von einer automatischen Pilzerntevorrichtung mit einem Schlitten (19), der beweglich über einem Pilzaufzuchtgebiet angeordnet ist, wobei die Abpflückkopf-Einrichtung an dem Schlitten befestigt ist und einen Druckluftkolben (10) mit einer Kolbenstange (14) aufweist, die an ihrem freien Ende einen Ansaugkopf (26) trägt, wobei der Schlitten bewegt wird, um die Eingriffslinie des Kolbens (10) auf einen zu erntenden Pilz auszurichten, und der Kolben (10) dann betätigt wird, um den Ansaugkopf in Richtung des Pilzes anzutreiben, wobei der Kolben (10) derart betrieben wird, daß die Bewegungsgeschwindigkeit des Ansaugkopfs (26) im wesentlichen konstant ist, wenn der Ansaugkopf (26) sich dem Pilz nähert, und daß die gesamte kinetische Energie der beweglichen Komponenten der Abpflückkopf-Einrichtung, die sich während der Bewegung dem Pilz nähert, auf nicht mehr als 0,25 J gehalten wird.

2. Verfahren nach Anspruch 1, **dadurch gekennzeichnet**, daß die Masse der beweglichen Komponenten auf weniger als 0,25 kg gehalten wird.

3. Verfahren nach Anspruch 1 oder 2, **dadurch gekennzeichnet**, daß die Annäherungsgeschwindigkeit des Ansaugkopfes (26) in Richtung eines zu erntenden Pilzes auf nicht mehr als 2 m/s gehalten wird.

4. Verfahren nach Anspruch 3, **dadurch gekennzeichnet**, daß die Annäherungsgeschwindigkeit des Ansaugkopfes (26) in Richtung eines zu erntenden Pilzes im Bereich von 1,5 m/s bis 2 m/s gehalten wird und die Masse der beweglichen Komponenten im Bereich von 0,14 kg bis 0,085 kg liegt.

5. Verfahren nach einem der vorhergehenden Ansprüche, **dadurch gekennzeichnet**, daß Druckluft auf den Druckluftkolben (10) zu Beginn des Betriebs des Druckluftkolbens gegeben wird, wodurch der Ansaugkopf in die Richtung eines aufzusammelnden Pilzes beschleunigt wird; und daß kurz danach die Entlüftung der Abluft aus dem Kolben begrenzt wird, um die Bewegungsgeschwindigkeit des Ansaugkopfes (26) zu begrenzen, während sich der Kopf kontinuierlich in die Richtung eines Pilzes bewegen kann, bis ein Kontakt damit hergestellt wird.

6. Verfahren nach einem der vorhergehenden Ansprüche, **dadurch gekennzeichnet**, daß der Ansaugkopf (26) mit einer Unterdruckquelle während der Bewegung des Ansaugkopfes in Richtung eines zu erntenden Pilzes und anschließend während der Bewegung des Kopfes weg von der Kontaktposition verbunden wird.

7. Verfahren nach Anspruch 6, **dadurch gekennzeichnet**, daß die Bewegungsumkehr der Kolbenstange (14) des Kolbens (10) bei Erkennung eines Druckabfalls in dem Ansaugkopf (26) eingeleitet wird, der durch einen Kontakt des Kopfs mit einem Pilz verursacht wird.

8. Verfahren nach einem der vorhergehenden Ansprüche, wobei der Ansaugkopf (26) um die Kopfachse gedreht wird, direkt nachdem der Kontakt zwischen dem Ansaugkopf und einem Pilz hergestellt wurde, wobei der Drehvorgang entweder vor oder während des Beginns der Bewegungsumkehr der Kolbenstange (14) des Kolbens (10) durchgeführt wird.

9. Abpflückkopf-Einrichtung zum Einbau in eine automatische Pilzerntevorrichtung mit einem Schlitten (19), der beweglich über einem Aufzuchtgebiet angeordnet ist, wobei die Abpflückkopf-Einrichtung einen Druckluftkolben (10) hat, der an dem Schlitten befestigbar ist, so daß die Eingriffslinie der Kolbenstange (14) des Kolbens (10) im wesentlichen in der Richtung eines ausgewählten Pilzes in dem Aufzuchtgebiet und davon weg verläuft, mit einem flexiblen, verformbaren Ansaugkopf (26), der an dem freien Ende der Kolbenstange (14) zum Kontakt und dann zum Halten eines ausgewählten Pilzes durch Unterdruck befestigt ist, und mit pneumatischen Steuerungsmitteln (24) zum Betreiben des Kolbens (10), wobei die pneumatischen Steuerungsmittel (24) dazu geeignet sind, anfangs Druckluft in den Kolben (10) zu führen, um die Kolbenstange (14) anzutreiben und so den Ansaugkopf (26) in die Richtung eines ausgewählten Pilzes zu bewegen, und auch dazu, das Ablassen der Abluft aus dem Kolben (10) zu begrenzen, um die Bewegungsgeschwindigkeit des Kopfes (26) einzuschränken, um dadurch die kinetische Energie der beweglichen Komponenten des Abpflückkopfes auf weniger als 0,25 J zur Zeit des Kontakts zwischen dem Ansaugkopf (26) und einem ausgewählten Pilz zu halten.

10. Abpflückkopf-Einrichtung nach Anspruch 9, **dadurch gekennzeichnet**, daß die Masse der beweglichen Komponenten des Kolbens (10) geringer als 0,25 kg ist.

11. Abpflückkopf-Einrichtung nach Anspruch 10, **dadurch gekennzeichnet**, daß die Masse der beweglichen Komponenten des Kolbens (10) im Bereich von 0,085 kg bis 0,15 kg liegt.

12. Abpflückkopf-Einrichtung nach einem der Ansprüche 9 bis 11, **dadurch gekennzeichnet**, daß der Druckkolben (10) einen Kolben (15) und eine Kolbenstange (14) hat, wobei der Kolben und die Kolbenstange frei gleitend in dem Druckkolbenzylinder (12) sind, ohne daß Dichtungen zwischen dem Kolben und dem Druckkolbenzylinder vorgesehen sind.

13. Abpflückkopf-Einrichtung nach einem der Ansprüche 9 bis 12 in Verbindung mit einem Schlitten (17), der zur Bewegung über einem Pilzaufzuchtgebiet angeordnet ist, wobei der pneumatische Druckkolben (10) der Abpflückkopf-Einrichtung an dem Schlitten befestigt ist, und mit Mitteln zum Bewegen des Schlittens, so daß die Bewegungsbahn der Kolbenstange (14) des Druckkolbens (10) mit einem zu erntenden Pilz ausgerichtet werden kann.

14. Abpflückkopf-Einrichtung nach Anspruch 13, **dadurch gekennzeichnet**, daß die Kolbenstange (14) nicht drehbar in dem Druckkolbenzylinder (12) befestigt ist, daß der Druckkolbenzylinder (12) drehbar an dem Schlitten (17) befestigt ist, und daß Mittel (20, 21) vorgesehen sind, um eine Drehbewegung des Druckkolbens (10) in bezug auf den Schlitten zu bewirken.

## Revendications

1. Procédé pour faire fonctionner un ensemble à tête ramasseuse (fig.4) d'un appareillage de récolte automatique des champignons comprenant un chariot (19) agencé pour se déplacer au-dessus d'une zone de culture des champignons, lequel ensemble à tête ramasseuse est monté sur le chariot et comporte un vérin pneumatique (10) muni d'une tige de piston (14) supportant à son extrémité libre une tête d'aspiration (26), procédé dans lequel on déplace le chariot pour amener la ligne d'action du vérin (10) en alignement avec un champignon à récolter, et on fait fonctionner le vérin (10) pour conduire la tête d'aspiration vers le champignon, on fait fonctionner le vérin (10) de façon que l'allure de mouvement de la tête d'aspiration (26) soit sensiblement constante tandis que la tête d'aspiration (26) s'approche du champignon, et en ce que l'énergie cinétique totale des composants mobiles de l'ensemble à tête ramasseuse s'approchant dudit champignon pendant ledit mouvement est maintenue à 0,25 J au maximum.

2. Procédé selon la revendication 1, caractérisé en ce que la masse des composants mobiles est maintenue à moins de 0,25 kg.

3. Procédé selon la revendication 1 ou 2, caractérisé en ce que la vitesse d'approche de la tête d'aspiration (26) vers un champignon à récolter est maintenue à 2 m/s au maximum.

4. Procédé selon la revendication 3, caractérisé en ce que la vitesse d'approche de la tête d'aspiration (26) vers un champignon à récolter est maintenue dans la plage allant de 1,5 m/s à 2 m/s, et la masse des composants mobiles est dans la plage allant de 0,14 kg à 0,085 kg.

5. Procédé selon l'une quelconque des revendications précédentes, caractérisé en ce qu'on fournit de l'air sous pression au vérin pneumatique (10) au début du fonctionnement du vérin, de façon à accélérer la tête d'aspiration vers un champignon à ramasser; et peu après on restreint l'évacuation de l'air d'échappement provenant du vérin pour limiter la vitesse de mouvement de la tête d'aspiration (26) tout en permettant à la tête de continuer le mouvement vers un champignon jusqu'à ce qu'un contact s'établisse avec celui-ci.

6. Procédé selon l'une quelconque des revendications précédentes, caractérisé en ce que la tête d'aspiration (26) est reliée à une source de pression inférieure à la pression atmosphérique pendant tout le mouvement de la tête d'aspiration vers un champignon à récolter et ensuite pendant le mouvement de la tête s'éloignant de la position de contact.

7. Procédé selon la revendication 6, caractérisé en ce que l'on amorce l'inversion du mouvement de la tige de piston (14) du vérin (10) lorsqu'une chute de pression dans la tête d'aspiration (26), provoquée par le contact de la tête avec un champignon, est détectée.

8. Procédé selon l'une quelconque des revendications précédentes, dans lequel on fait tourner la tête d'aspiration (26) autour de l'axe de la tête immédiatement après établissement du contact entre la tête d'aspiration et un champignon, cette action de tourner prenant place ou avant ou pendant le début du mouvement de recul de la tige de piston (14) du vérin (10).

9. Ensemble à tête ramasseuse destiné à être incorporé dans un appareillage de récolte automatique des champignons comprenant un chariot (19) agencé pour se déplacer au dessus d'une zone de culture, lequel ensemble à tête ramasseuse comporte un vérin pneumatique (10) agencé pour être monté sur le chariot de façon que la ligne d'action de la tige de piston (14) du vérin (10) soit d'une manière générale une ligne allant vers un champignon choisi dans la zone de culture et s'en éloignant, une tête d'aspiration déformable élastiquement (26) montée à l'extrémité libre de la tige de piston (14) pour entrer en contact avec un champignon choisi puis retenir celui-ci par aspiration, et des moyens de commande pneumatique (24) pour faire fonctionner le vérin (10), le moyen de commande pneumatique (24) est convenablement adapté de façon à fournir initialement de l'air sous pression au vérin (10) pour conduire la tige du piston (14) et ainsi déplacer la tête d'aspiration (26) vers un champignon choisi, et aussi restreindre l'évacuation de l'air d'échappement provenant du vérin (10) pour limiter la vitesse de mouvement de la tête (26) de façon à maintenir l'énergie cinétique des composants mobiles de la tête ramasseuse à moins de 0,25 J au moment du contact entre la tête d'aspiration (26) et un champignon choisi.

10. Ensemble à tête ramasseuse selon la revendication 9, caractérisé en ce que la masse des composants mobiles du vérin (10) est inférieure à 0,25 kg.

11. Ensemble à tête ramasseuse selon la revendication 10, caractérisé en ce que la masse des composants mobiles du vérin (10) est dans la plage allant de 0,085 kg à 0,15 kg.

12. Ensemble à tête ramasseuse selon l'une quelconque des revendications 9 à 11, caractérisé en ce que le vérin (10) comprend un piston (15) et une tige de piston (14), le piston et la tige étant librement coulissants dans le cylindre du vérin (12), sans que des joints soient prévus entre le piston et le cylindre du verin.

13. Ensemble à tête ramasseuse selon l'une quelconque des revendications 9 à 12, en combinaison avec un chariot (17) agencé pour se déplacer au-dessus d'une zone de culture des champignons, le vérin pneumatique (10) de l'ensemble à tête ramasseuse étant monté sur le chariot et des moyens étant prévus pour déplacer le chariot de façon que la ligne de mouvement de la tige de piston (14) du vérin (10) puisse être alignée avec un champignon à récolter.

14. Ensemble à tête ramasseuse selon la revendication 13, caractérisé en ce que la tige du piston (14) est montée de manière non rotative dans le cylindre du vérin (12), en ce que le cylindre du vérin (12) est monté rotatif sur le chariot (17), et en ce que les moyens (20, 21) sont prévus pour effectuer un mouvement de rotation du vérin (10) relativement au chariot.
